# EUROPÄISCHE PATENTSCHRIFT

(11) **EP 2 100 052 B1**
(45) Veröffentlichungstag und Bekanntmachung des Hinweises auf die Patenterteilung: **19.12.2018**
(21) Anmeldenummer: 07856218.8
(22) Anmeldetag: 22.11.2007
(51) Int. Cl.: F16F 15/123

(54) **GLEITSCHUH FÜR EINEN TORSIONSSCHWINGUNGSDÄMPFER, DIVIDIERBLECH MIT EINEM GLEITSCHUH, TORSIONSSCHWINGUNGSDÄMPFER MIT EINEM GLEITSCHUH UND VERFAHREN ZUR HERSTELLUNG EINES GLEITSCHUHS**
SLIDING BLOCK FOR A TORSIONAL VIBRATION DAMPER, SEPARATOR SHEET COMPRISING A SLIDING BLOCK, TORSIONAL VIBRATION DAMPER COMPRISING A SLIDING BLOCK AND METHOD FOR PRODUCING A SLIDING BLOCK
PATIN DE GLISSEMENT POUR AMORTISSEUR DE VIBRATIONS DE TORSION, TÔLE SÉPARATRICE POURVUE D'UN PATIN DE GLISSEMENT, AMORTISSEUR DE VIBRATIONS DE TORSION POURVU D'UN PATIN DE GLISSEMENT ET PROCÉDÉ DE PRODUCTION D'UN PATIN DE GLISSEMENT

(30) Priorität: 14.12.2006 DE 102006058954
(43) Veröffentlichungstag der Anmeldung: 16.09.2009
(73) Patentinhaber: BorgWarner Inc., Auburn Hills, MI 48326 (US)
(72) Erfinder: BÖLLING, Jochen, 76534 Baden-Baden (DE); HALM, Christian Bernhard, 69190 Walldorf (DE); EBNER, Till Martin Lutz, 64342 Seeheim-Jugeenheim (DE); HEINZ, Volker, 67354 Römerberg (DE)
(74) Vertreter: Leckel, Ulf
(86) Internationale Anmeldenummer: PCT/EP2007/010113
(87) Internationale Veröffentlichungsnummer: WO 2008/071300

(56) Entgegenhaltungen:
- EP-A- 0 994 272
- DE-A1- 10 209 838
- FR-A- 2 652 399
- US-A- 4 347 717

## Beschreibung

Die vorliegende Erfindung betrifft einen Gleitschuh für einen Torsionsschwingungsdämpfer mit einem ersten Oberflächenabschnitt, der im Einbauzustand einem angrenzenden Federelement zugewandt ist. Die vorliegende Erfindung betrifft ferner ein Dividierblech mit einem solchen Gleitschuh, einen Torsionsschwingungsdämpfer mit einem solchen Gleitschuh oder Dividierblech und ein Verfahren zur Herstellung eines solchen Gleitschuhs.

Aus dem Stand der Technik sind eine Vielzahl von Torsionsschwingungsdämpfern bzw. Drehschwingungsdämpfern in verschiedenen Anwendungsgebieten bekannt. Die bekannten Torsionsschwingungsdämpfer werden insbesondere im Kraftfahrzeugbau zur elastischen Kopplung von Verbrennungskraftmaschine und Antriebsstrang eingesetzt. Auf diese Weise soll verhindert werden, dass Torsionsschwingungen von der Verbrennungskraftmaschine auf den Antriebsstrang bzw. das Getriebe übertragen werden. Eine solche Übertragung ist insbesondere bei Verbrennungskraftmaschinen mit vergleichsweise wenig Zylindern und bei niedrigen Drehzahlen gegeben. Bei effektiver Dämpfung derartiger Schwingungen kann die Verbrennungskraftmaschine mit niedrigeren Drehzahlen betrieben werden, was im Allgemeinen einen verringerten Kraftstoffverbrauch zur Folge hat.

So beschreibt die EP 1584838 A1 einen Torsionsschwingungsdämpfer mit einem antriebsseitigen Primärelement und einem abtriebsseitigen Sekundärelement, wobei das Primärelement über eine Federeinrichtung federelastisch mit dem Sekundärelement gekoppelt ist, so dass diese um eine Neutralposition gegeneinander verdreht werden können. Primär- und Sekundärelement umfassen jeweils an die Federeinrichtung angrenzende Mitnehmer, die nachstehend als Primär- bzw. Sekundärmitnehmer bezeichnet werden. Ein antriebsseitig an dem Primärelement anliegendes Drehmoment kann somit mittels des Primärmitnehmers zunächst auf die Federeinrichtung und von der Federeinrichtung über den Sekundärmitnehmer auf das Sekundärelement übertragen werden.

Die Federeinrichtung des bekannten Torsionsschwingungsdämpfers besteht aus mehreren in Umfangsrichtung des Torsionsschwingungsdämpfers hintereinander angeordneten Federelementen, wobei es sich bei den Federelementen um Spiralfedern handelt. Zwischen den Federelementen sind so genannte Gleitschuhe angeordnet, an welchen die aufeinander folgenden Federelemente abgestützt sind und die die Federelemente miteinander verbinden. Die Gleitschuhe sind an ihrer der Rotationsachse des Torsionsschwingungsdämpfers radial abgewandten Seite mit einer Gleitfläche versehen, die der Abstützung der Federeinrichtung gegenüber einer Wandung des Torsionsschwingungsdämpfers dient.

Da eine solche Reibung zwischen dem Gleitschuh und der Wandung einen erhöhten Verschleiß an dem Gleitschuh bedingt, während der entstehende Abrieb zu einer Verschmutzung des Schmiermittels - wie beispielsweise Öl - innerhalb des Torsionsschwingungsdämpfers führt, schlägt die EP 1584838 A1 weiterhin vor, zumindest teilweise so genannte Dividierbleche zu verwenden. Diese Dividierbleche sind als Ringelemente und daran befestigte Gleitschuhe ausgebildet, wobei die Gleitschuhe wiederum zwischen den Federelementen angeordnet sind. Da die Gleitschuhe derart an dem Ringelement angeordnet sind, dass sich die im Betrieb des Torsionsschwingungsdämpfers auftretenden und an den Gleitschuhen angreifenden Zentrifugalkräfte in der Summe gänzlich oder teilweise kompensieren, wird auch der Begriff Trennelement anstelle der Bezeichnung Gleitschuh verwendet.

Eine andere Lösung zur Verbesserung der Gleitfähigkeit des Gleitschuhs und zur Verringerung des Abriebs an der Gleitfläche des Gleitschuhs ist aus der EP 0529669 A1 bekannt. Das hierin offenbarte Zweimassenschwungrad umfasst zwei relativ zueinander drehbare Schwungräder, die durch eine Drehschwingungsdämpfereinrichtung drehelastisch miteinander gekoppelt sind, wobei die Drehschwingungsdämpfereinrichtung eine der eingangs beschriebenen Federeinrichtungen umfasst, die sich im Wesentlichen aus Federelementen und Gleitschuhen zusammensetzt. Die Gleitschuhe der bekannten Federeinrichtung können beispielsweise aus Metall bestehen und im Bereich der radial nach außen weisenden Gleitfläche gehärtet sein. Darüber hinaus wird in einer weiteren Ausführungsform ein Gleitschuh aus Kunststoff vorgeschlagen, dessen Gleitfläche mit einer gleitgünstigen Auflage beschichtet ist oder eine Beimischung aus gleitgünstigem Material, insbesondere Teflon, enthält.

Der zuvor beschriebene Stand der Technik hat zu einer Reduzierung des Verschleißes an dem Gleitschuh der bekannten Federeinrichtungen geführt. Dennoch ist der Verschleiß an den Gleitschuhen noch immer zu hoch, was insbesondere zu einer Verunreinigung des Schmiermittels innerhalb des Torsionsschwingungsdämpfers führen kann.

Es ist daher eine Aufgabe der vorliegenden Erfindung, einen Gleitschuh für eine Torsionsschwingungsdämpfer zur schaffen, der einerseits besonders verschleißfest ist und im Betrieb lediglich geringen Abrieb erzeugt und andererseits eine sichere Positionierung eines Federelements an dem Gleitschuh ermöglicht. Der vorliegenden Erfindung liegt ferner die Aufgabe zugrunde, ein Dividierblech mit einem solchen vorteilhaften Gleitschuh anzugeben. Darüber hinaus liegt der Erfindung die Aufgabe zugrunde, einen Torsionsschwingungsdämpfer zu schaffen, dessen abriebsbedingte Verschmutzung während des Betriebes besonders gering ist. Des Weiteren liegt der Erfindung die Aufgabe zugrunde, ein Verfahren zur Herstellung eines solchen vorteilhaften Gleitschuhs anzugeben.

Diese Aufgabe wird durch die in Patentanspruch 1, 20, 21 bzw. 25 angegebenen Merkmale gelöst. Vorteilhafte Ausführungsformen der Erfindung sind Gegenstand der Unteransprüche.

Der erfindungsgemäße Gleitschuh für einen Torsionsschwingungsdämpfer weist einen ersten Oberflächenabschnitt auf, der im Einbauzustand einem an den Gleitschuh angrenzenden Federelement des Torsionsschwingungsdämpfers zugewandt ist. Bei dem ersten Oberflächenabschnitt kann es sich beispielsweise um einen zusammenhängenden oder mehrteiligen Abschnitt der Oberfläche handeln. Der erste Oberflächenabschnitt ist härter als ein anderer Oberflächenabschnitt des Gleitschuhs ausgebildet. Der Gleitschuh weist einen Grundkörper auf, der aus einem Grundmaterial besteht. Der erste Oberflächenabschnitt ist von mindestens einer Einlage gebildet, die härter als das Grundmaterial ausgebildet ist. So kann die Einlage beispielsweise von einem Metallteil gebildet sein, das an dem Grundkörper aus Kunststoff angeordnet ist. Der erste Oberflächenabschnitt ist von mindestens zwei lang gestreckten, voneinander beabstandeten und hervorstehenden Einlagen gebildet, an denen ein Federelement in radialer Richtung zentrierend abgestützt werden kann. So wird das radial nach außen abgestützte Federelement durch die spezielle Ausbildung der beiden Einlagen automatisch und sicher in einer vorbestimmten Position zentriert. Alternativ ist der erste Oberflächenabschnitt von einer plattenförmigen Einlage gebildet, die in einer eine großflächige radiale Abstützung eines Federelementes gewährleistenden Weise gekrümmt ist. So kann die Einlage derart gekrümmt sein, dass der erste Oberflächenabschnitt das Federelement zumindest teilweise eng anliegend umschließt, wodurch nicht nur eine großflächige Anlage sondern auch eine sichere Positionierung des Federelementes an dem ersten Oberflächenabschnitt gewährleistet ist. Eine plattenartige Einlage ermöglicht außerdem die Schaffung eines großflächigen ersten Oberflächenabschnitts, ohne dass bei der Herstellung eine Vielzahl von kleinen Einlagen verwendet werden müsste, wodurch die Herstellung vereinfacht ist.

Der erfindungsgemäße Gleitschuh hat ferner den Vorteil, dass der Verschleiß an dem Gleitschuh in dem Bereich, der dem Federelement zugewandt ist, durch den härteren ersten Oberflächenabschnitt geringer ist. So kann das Federelement während des Betriebes an den ersten Oberflächenabschnitt angrenzen und entlang desselben bewegt werden, ohne einen starken Abrieb zu erzeugen.

In einer bevorzugten Ausführungsform des erfindungsgemäßen Gleitschuhs weist der erste Oberflächenabschnitt eine Stützfläche zur radialen Abstützung des Federelementes auf. So ist das Federelement bezogen auf dessen Längsachse in radialer Richtung an der Stützfläche zur radialen Abstützung abgestützt. Dabei kann das Federelement sowohl dauerhaft als auch nur bei bestimmten Rotationsgeschwindigkeiten an der Stützfläche abgestützt sein. Letzteres ist beispielsweise der Fall, wenn sich das Federelement aufgrund der hohen Rotationsgeschwindigkeit und der dadurch erzeugten Zentrifugalkraft radial nach außen durchbiegt und erst dadurch zur Anlage an der Stützfläche kommt. Die härtere Stützfläche verhindert wiederum einen starken Verschleiß an dem Gleitschuh und verringert den Abrieb.

In einer weiteren bevorzugten Ausführungsform des erfindungsgemäßen Gleitschuhs weist der erste Oberflächenabschnitt eine Stützfläche zur axialen Abstützung des Federelementes auf. So ist das Federelement bezogen auf dessen Längsachse in axialer Richtung an der Stützfläche zur axialen Abstützung abgestützt. Auf diese Weise können auch die in axialer Richtung auf den Gleitschuh wirkenden Kräfte durch die Stützfläche zur axialen Abstützung adäquat abgestützt werden, um Verschleiß und Abrieb an dem Gleitschuh zu verhindern.

Gemäß einer weiteren bevorzugten Ausführungsform des erfindungsgemäßen Gleitschuhs weist der Gleitschuh einen zweiten Oberflächenabschnitt auf, der eine Gleitfläche zur gleitenden Abstützung des Gleitschuhs aufweist. Diese Gleitfläche kann im Einbauzustand des Gleitschuhs beispielsweise radial nach außen weisen und an einer umlaufenden Wand des Torsionsschwingungsdämpfers abgestützt sein.

In einer weiteren bevorzugten Ausführungsform des erfindungsgemäßen Gleitschuhs ist der zweite Oberflächenabschnitt härter als ein anderer Oberflächenabschnitt des Gleitschuhs ausgebildet. Da der zweite Oberflächenabschnitt ebenso wie der erste Oberflächenabschnitt in Reibkontakt mit einem anderen Bestandteil des Torsionsschwingungsdämpfers tritt, kann durch diese Gestaltung ein Verschleiß und Abrieb besonders sicher verhindert werden.

In einer besonders bevorzugten Ausführungsform des erfindungsgemäßen Gleitschuhs ist der erste Oberflächenabschnitt härter als der zweite Oberflächenabschnitt ausgebildet. Da die Federelemente, die zumeist als Spiralfedern ausgebildet sind, aufgrund ihrer Form eher an mehreren kleineren Stellen des ersten Oberflächenabschnitts abgestützt sind, während die Gleitfläche des zweiten Oberflächenabschnitts großflächiger an einem anderen Bestandteil des Torsionsschwingungsdämpfers anliegen kann, muss der zweite Oberflächenabschnitt nicht so hart wie der erste Oberflächenabschnitt ausgebildet sein, um Verschleiß zu verhindern. Der Herstellungsaufwand für eine solche Ausführungsform des Gleitschuhs ist somit reduziert.

In einer weiteren vorteilhaften Ausführungsform des erfindungsgemäßen Gleitschuhs ist das Grundmaterial des Grundkörpers Kunststoff, vorzugsweise faserverstärkter Kunststoff. Durch die Verwendung eines Kunststoffes kann die Masse des umlaufenden Gleitschuhs gering gehalten werden, wobei - insbesondere durch die Faserverstärkung - eine hohe Festigkeit des Grundkörpers gewährleistet ist.

In einer besonders vorteilhaften Ausführungsform des erfindungsgemäßen Gleitschuhs ist der zweite Oberflächenabschnitt von mindestens einer Einlage gebildet, die härter als das Grundmaterial ausgebildet ist. So kann die Einlage beispielsweise von einem Metallteil gebildet sein, das an dem Grundkörper aus Kunststoff angeordnet ist.

In einer weiteren besonders vorteilhaften Ausführungsform des erfindungsgemäßen Gleitschuhs ist die Einlage formschlüssig mit dem Grundkörper verbunden. Im Gegensatz zu einer stoffschlüssigen Verbindung, die beispielsweise mit Hilfe eines Klebemittels erzielt wird, gestaltet sich die Herstellung eines Gleitschuhs, bei dem die Einlage formschlüssig mit dem Grundkörper verbunden ist, einfacher. Darüber hinaus ist ein besserer Halt der Einlage an dem Grundkörper selbst bei starken Temperaturveränderungen während des Betriebs des Torsionsschwingungsdämpfers gewährleistet.

Um den Gleitschuh besonders einfach herstellen zu können und einen sicheren Halt der Einlage an dem Grundkörper zu gewährleisten, ist die Einlage in einer weiteren bevorzugten Ausführungsform des erfindungsgemäßen Gleitschuhs in das Grundmaterial eingegossen oder mit dem Grundkörper vernietet. So können beispielsweise die seitlichen Ränder der Einlage von dem Grundmaterial umgriffen werden, wohingegen der mittlere Teil der Einlage den nach außen weisenden ersten Oberflächenabschnitt ausbildet. Sowohl die in das Grundmaterial eingegossene Einlage als auch die mit dem Grundkörper vernietete Einlage ist besonders sicher an dem Grundkörper befestigt, und der Gleitschuh kann besonders einfach gefertigt werden.

In einer weiteren besonders bevorzugten Ausführungsform des erfindungsgemäßen Gleitschuhs sind die Nietkörper zum Vernieten der Einlage einstückig mit dem Grundkörper ausgebildet. Hierdurch ist eine besonders einfache Fertigung des Gleitschuhs möglich, zumal die Nietkörper zumindest in einer Rohform zusammen mit dem Grundkörper aus demselben Grundmaterial gefertigt werden könnten. Auch entfällt hierdurch der Verfahrensschritt des Befestigens eines separaten Nietkörpers an dem Grundkörper, und es besteht ein starker Zusammenhalt zwischen Grundkörper und Nietkörper.

Gemäß einer vorteilhaften Ausführungsform des erfindungsgemäßen Gleitschuhs ist der erste und/oder zweite Oberflächenabschnitt von einer Beschichtung auf dem Grundkörper gebildet, die härter als das Grundmaterial ausgebildet ist.

Als besonders verschleißfest hat sich eine weitere vorteilhafte Ausführungsform des erfindungsgemäßen Gleitschuhs erwiesen, bei der die Einlage und/oder die Beschichtung aus Metall besteht.

In einer weiteren bevorzugten Ausführungsform des erfindungsgemäßen Gleitschuhs weist der Grundkörper ein Zwischenteil zur Anordnung zwischen zwei angrenzenden Federelementen und ein Gleitteil auf. Gleitteil und Zwischenteil sind vorzugsweise einstückig aus Kunststoff ausgebildet.

In einer besonders bevorzugten Ausführungsform des erfindungsgemäßen Gleitschuhs umfasst das Gleitteil einen ersten Gleitteilabschnitt, der sich in die eine Umfangsrichtung erstreckt, und einen zweiten Gleitteilabschnitt, der sich in die andere Umfangsrichtung erstreckt. So kann der erste Gleitteilabschnitt der radialen Abstützung eines ersten Federelementes und der zweite Gleitteilabschnitt der radialen Abstützung eines zweiten Federelementes dienen, wohingegen das Zwischenteil sowohl das erste als auch das zweite Federelement stirnseitig abstützt.

In einer weiteren vorteilhaften Ausführungsform des erfindungsgemäßen Gleitschuhs ist die Stützfläche zur radialen Abstützung eines Federelementes an dem ersten und/oder zweiten Gleitteilabschnitt vorgesehen.

Im Einbauzustand der Gleitschuhe sind insbesondere diejenigen Gleitschuhe am stärksten von Verschleiß betroffen, die zwischen zwei Federelementen angeordnet sind, von denen mindestens eine an den Mitnehmer eines Primär- oder Sekundärelements des Torsionsschwingungsdämpfers angrenzt. An diesen Gleitschuhen ist wiederum der Verschleiß auf derjenigen Seite am größten, die dem an den Mitnehmer angrenzenden Federelement zugewandt ist. Um einen Gleitschuh zu schaffen, der einerseits dieser Tatsache Rechnung trägt und andererseits einfach hergestellt werden kann, ist die Stützfläche zur radialen Abstützung eines Federelementes in einer besonders bevorzugten Ausführungsform des erfindungsgemäßen Gleitschuhs lediglich an dem ersten Gleitteilabschnitt vorgesehen. Diese härtere Stützfläche kann dann der radialen Abstützung des an den Mitnehmer angrenzenden Federelementes dienen.

Da das Federelement, das an den Mitnehmer von Primär- oder Sekundärelement angrenzt, lediglich durch einen Gleitschuh in radialer Richtung abgestützt ist, während andere Federelemente durch zwei Gleitschuhe abgestützt werden, ist der erste Gleitteilabschnitt in einer weiteren bevorzugten Ausführungsform des erfindungsgemäßen Gleitschuhs länger als der zweite Gleitteilabschnitt ausgebildet. Der längere erste Gleitteilabschnitt gewährleistet somit auch eine sichere radiale Abstützung des an den Mitnehmer von Primär- oder Sekundärelement angrenzenden Federelementes.

In einer weiteren vorteilhaften Ausführungsform des erfindungsgemäßen Gleitschuhs ist die Stützfläche zur axialen Abstützung eines Federelementes an dem Zwischenteil vorgesehen.

Das erfindungsgemäße Dividierblech weist mindestens zwei Gleitschuhe gemäß der Erfindung auf. So kann das Dividierblech beispielsweise ein Ringelement umfassen, an dem die erfindungsgemäßen Gleitschuhe befestigt sind.

Der erfindungsgemäße Torsionsschwingungsdämpfer weist mindestens einen Gleitschuh und/oder ein Dividierblech der zuvor beschriebenen Art auf. Bezüglich der Vorteile des erfindungsgemäßen Torsionsschwingungsdämpfers sei auf die vorstehende Beschreibung des erfindungsgemäßen Gleitschuhs verwiesen.

In einer bevorzugten Ausführungsform des erfindungsgemäßen Torsionsschwingungsdämpfers weist der Torsionsschwingungsdämpfer ein Primärelement mit mindestens einem Primärmitnehmer, ein Sekundärelement mit mindestens einem Sekundärmitnehmer und mindestens eine Federeinrichtung zur federelastischen Kopplung von Primärelement und Sekundärelement auf, wobei die Federeinrichtung mindestens zwei in Umfangsrichtung hintereinander angeordnete Federelemente umfasst, zwischen denen der Gleitschuh angeordnet ist.

In einer weiteren bevorzugten Ausführungsform des erfindungsgemäßen Torsionsschwingungsdämpfers weist der erste Oberflächenabschnitt die gleiche Härte wie das angrenzende Federelement auf.

Wie bereits zuvor erläutert, sind diejenigen Gleitschuhe einer größeren Belastung ausgesetzt, die an ein Federelement angrenzen, das wiederum an einen Mitnehmer von Primär- oder Sekundärelement angrenzt. Aus diesem Grunde sind in einer besonders bevorzugten Ausführungsform des erfindungsgemäßen Torsionsschwingungsdämpfers sowohl die erfindungsgemäßen Gleitschuhe als auch herkömmliche Gleitschuhe vorgesehen, wobei die erfindungsgemäßen Gleitschuhe an ein Federelement angrenzen, an das der Primärmitnehmer und/oder der Sekundärmitnehmer angrenzt, während die herkömmlichen Gleitschuhe ausschließlich an Federelemente angrenzen, die nicht an den Primärmitnehmer und/oder den Sekundärmitnehmer angrenzen. So müssen nicht alle Gleitschuhe auf die erfindungsgemäße Weise ausgestaltet sein, vielmehr können auch herkömmliche Kunststoffgleitschuhe verwendet werden, ohne dass hierdurch der Verschleiß oder Abrieb stark erhöht ist.

Das erfindungsgemäße Verfahren zur Herstellung eines Gleitschuhs weist die Verfahrensschritte des Bereitstellens einer Einlage, die härter als das Grundmaterial eines Grundkörpers des Gleitschuhs ausgebildet ist, und des Eingießens der Einlage in den Grundkörper oder des Vernietens der Einlage mit dem Grundkörper auf. Unter dem Eingießen der Einlage in den Grundkörper ist hierbei zu verstehen, dass der Grundkörper gegossen wird, wobei die Einlage zuvor in die Gussform eingebracht wurde. Vorzugsweise soll die eingegossene Einlage dabei formschlüssig mit dem Grundkörper verbunden werden. Das erfindungsgemäße Verfahren ist besonders einfach durchführbar und dient der Schaffung eines Gleitschuhs, dessen Einlage besonders sicher mit dem Grundkörper des Gleitschuhs verbunden ist, selbst wenn starke Temperaturschwankungen auftreten.

In einer bevorzugten Ausführungsform des erfindungsgemäßen Verfahrens weist das Vernieten der Einlage mit dem Grundkörper die Verfahrensschritte des Bereitstellens eines Grundkörpers mit mindestens einem Vorsprung, der einstückig mit dem Grundkörper ausgebildet ist, des Anlegens der Einlage an den Grundkörper und des plastischen Verformens des Vorsprungs zur Erzeugung eines die Einlage klemmend hintergreifenden Nietkopfes auf. Diese Ausführungsform des Verfahrens gewährleistet eine besonders einfache, schnelle und sichere Verbindung des Grundkörpers mit der Einlage.

In einer besonders bevorzugten Ausführungsform des erfindungsgemäßen Verfahrens wird eine Einlage mit mindestens einer Aussparung bereitgestellt, wobei die Einlage derart an den Grundkörper angelegt wird, dass sich der Vorsprung durch die Aussparung erstreckt. Eine derartige Aussparung kann beispielsweise seitlich an der Einlage vorgesehen sein und gewährleistet ein besonders sicheren Zusammenhalt von Einlage und Grundkörper.

Die Erfindung wird im Folgenden anhand beispielhafter Ausführungsformen unter Bezugnahme auf die beigefügten Zeichnungen näher erläutert. Es zeigen:
- Fig. 1: eine perspektivische Explosionsdarstellung einer Ausführungsform des erfindungsgemäßen Torsionsschwingungsdämpfers,
- Fig. 2: eine schematische Vorderansicht des Torsionsschwingungsdämpfers von Fig. 1 in einer ersten Ausführungsform in geschnittener Darstellung,
- Fig. 3: eine schematische Vorderansicht des Torsionsschwingungsdämpfers von Fig. 1 in einer zweiten Ausführungsform in geschnittener Darstellung,
- Fig. 4: eine perspektivische Darstellung eines Gleitschuhs von Fig. 3 in einer ersten Ausführungsform,
- Fig. 5: eine perspektivische Darstellung eines Gleitschuhs von Fig. 3 in einer zweiten Ausführungsform,
- Fig. 6: eine perspektivische Darstellung eines Gleitschuhs von Fig. 3 in einer dritten Ausführungsform,
- Fig. 7: einen Querschnitt durch eine Gussform zur Veranschaulichung des erfindungsgemäßen Verfahrens zur Herstellung eines Gleitschuhs in einer ersten Ausführungsform,
- Fig. 8: eine perspektivische Darstellung zur Veranschaulichung des erfindungsgemäßen Verfahrens zur Herstellung eines Gleitschuhs in einer zweiten Ausführungsform mit der Einlage vor dem Anlegen an dem Grundkörper und
- Fig. 9: die Darstellung von Fig. 8 mit der an den Grundkörper angelegten Einlage.

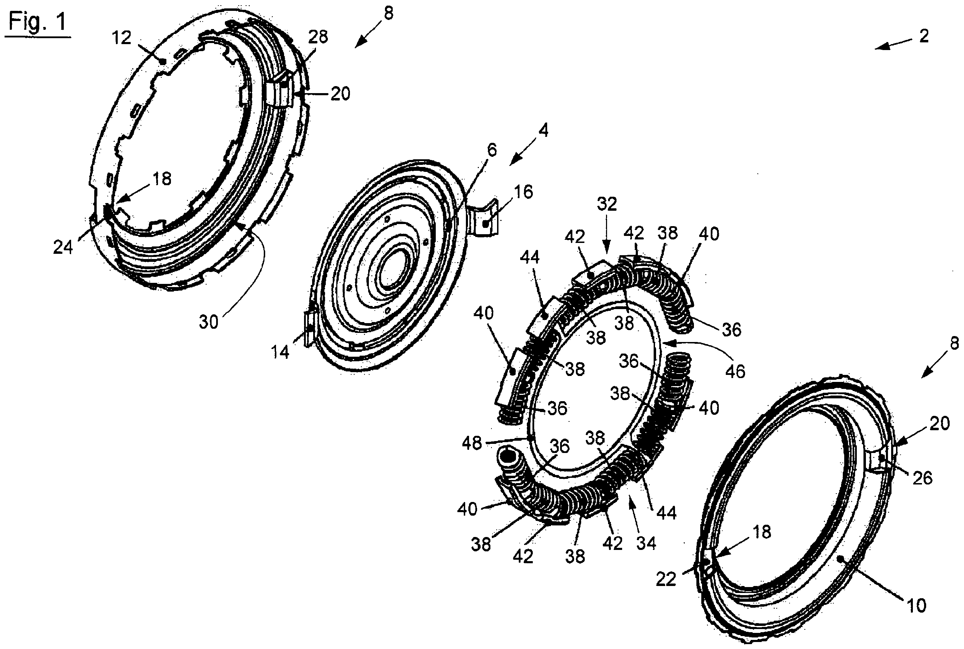

Fig. 1 zeigt eine perspektivische Explosionsdarstellung einer Ausführungsform des erfindungsgemäßen Torsionsschwingungsdämpfers 2. Der Torsionsschwingungsdämpfer 2 weist ein motorseitiges Primärelement 4 in Form einer Mittelscheibe 6 und ein getriebeseitiges Sekundärelement 8 auf, wobei sich letzteres aus einer vorderen Seitenscheibe 10 und einer hinteren Seitenscheibe 12 zusammensetzt, die drehfest miteinander verbunden sind.

Das Primärelement 4 in Form der Mittelscheibe 6 weist zwei Mitnehmer auf, die nachstehend als Primärmitnehmer 14, 16 bezeichnet werden und einander gegenüberliegend am Außenumfang der Mittelscheibe 6 angeordnet sind. An den beiden Seitenscheiben 10, 12 des Sekundärelements 8 sind ebenfalls zwei Mitnehmer vorgesehen, die nachstehend als Sekundärmitnehmer 18, 20 bezeichnet werden. Wie das Sekundärelement 8 selbst setzen sich auch die Sekundärmitnehmer 18 bzw. 20 aus einem Vorderteil 22 an der vorderen Seitenscheibe 10 und einem Hinterteil 24 an der hinteren Seitenscheibe 12 bzw. aus einem Vorderteil 26 an der vorderen Seitenscheibe 10 und einem Hinterteil 28 an der hinteren Seitenscheibe 12 zusammen. Primär- bzw. Sekundärmitnehmer 14, 16, 18, 20 sind vorzugsweise einstückig mit dem Primär- bzw. Sekundärelement 4, 8 ausgebildet.

Zwischen der vorderen Seitenscheibe 10 und der hinteren Seitenscheibe 12 ist im zusammengesetzten Zustand ein Ringraum 30 ausgebildet. In dem Ringraum 30 sind zwei Federeinrichtungen 32, 34 zur federelastischen Kopplung von Primärelement 4 und Sekundärelement 8 vorgesehen. Die Federeinrichtungen 32, 34 weisen mehrere in Umfangsrichtung hintereinander angeordnete Federelemente 36, 38 auf, die vorzugsweise als Spiralfedern ausgebildet sind. Hierbei sind die endseitigen Federelemente 36, die stirnseitig unmittelbar an die Primär- und Sekundärmitnehmer 14, 16, 18, 20 angrenzen, von den zwischenliegenden Federelementen 38 zu unterscheiden, die an keinen Primär- oder Sekundärmitnehmer 14, 16 18, 20 angrenzen.

Die Federeinrichtungen 32, 34 umfassen ferner Gleitschuhe 40, 42, 44, die stirnseitig zwischen den Federelementen 32, 34 angeordnet sind. Hierbei sind zunächst die endseitigen Gleitschuhe 40, die an die endseitigen Federelemente 36 angrenzen, von den anderen Gleitschuhen 42, 44 zu unterscheiden. Ferner sind die Gleitschuhe 42 von den Gleitschuhen 44 zu unterscheiden, da letztere als Teil eines Dividierbleches 46 ausgebildet sind. Dieses Dividierblech 46 umfasst ein Ringelement 48 an dem umfangsmäßig die Gleitschuhe 44 angeordnet sind, wobei sich der eine Gleitschuh 44 zwischen die Federelemente 38 der einen Federeinrichtung 32 und der andere Gleitschuh 44 zwischen die Federelemente 38 der anderen Federeinrichtung 34 erstreckt. Der Gleitschuh 44 wird auch als Trennelement bezeichnet, wenn dieser aufgrund des Kräfteausgleichs nicht mehr an einem anderen Teil des Torsionsschwingungsdämpfers 2, wie beispielsweise der hinteren Seitenscheibe 12, gleitend abgestützt ist. Bezüglich der Vorteile eines Dividierbleches sei auf den Stand der Technik verwiesen.

Eine Rotation des motorseitigen Primärelements 4 kann über die Primärmitnehmer 14, 16 der Mittelscheibe 6, die Federeinrichtungen 32, 34 und die Sekundärmitnehmer 18, 20 der drehfest miteinander verbundenen Seitenscheiben 10, 12 federelastisch auf das getriebeseitige Sekundärelement 8 übertragen werden.

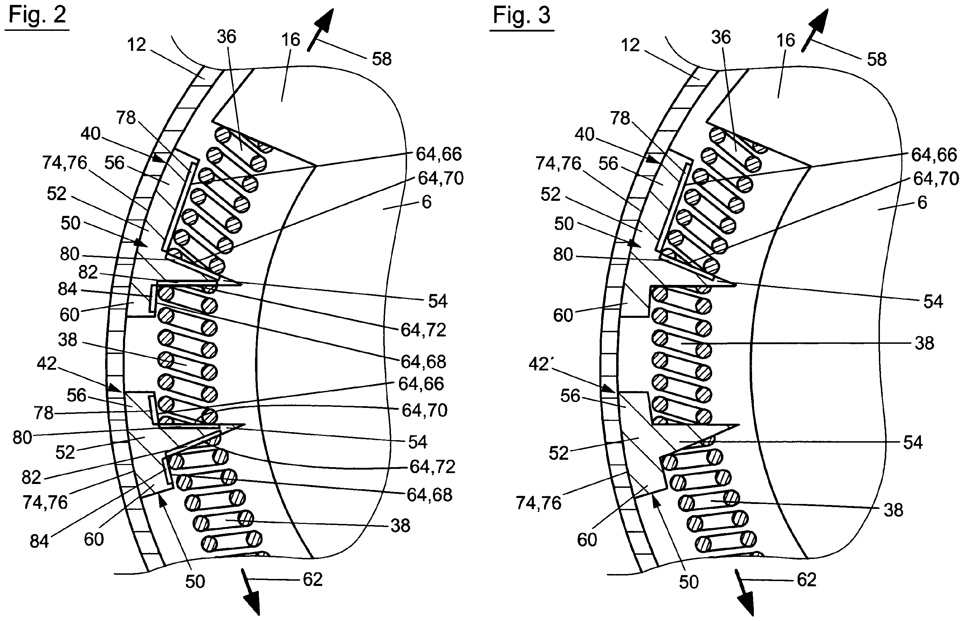

Nachstehend werden unter Bezugnahme auf Fig. 2 die Gleitschuhe 40 und 42 in einer ersten Ausführungsform näher erläutert. So weisen die Gleitschuhe 40, 42 zunächst jeweils einen Grundkörper 50 auf, der aus einem Grundmaterial besteht. Bei diesem Grundmaterial handelt es sich vorzugsweise um faserverstärkten Kunststoff. Der Grundkörper 50 umfasst ein äußeres Gleitteil 52 und ein sich radial nach innen erstreckendes Zwischenteil 54, wobei das Zwischenteil 54 zwischen den Stirnseiten der beiden an den Gleitschuh 40, 42 angrenzenden Federelemente 36, 38 bzw. 38, 38 angeordnet ist.

Das Gleitteil 52 weist einen ersten Gleitteilabschnitt 56, der sich ausgehend von dem Zwischenteil 54 in die eine Umfangsrichtung 58 des Torsionsschwingungsdämpfers 2 erstreckt, und einen zweiten Gleitteilabschnitt 60 auf, der sich ausgehend von dem Zwischenteil 54 in die andere bzw. entgegengesetzte Umfangsrichtung 62 des Torsionsschwingungsdämpfers 2 erstreckt. Bei dem endseitigen Gleitschuh 40, der an das endseitige Federelement 36 angrenzt, ist dabei der erste Gleitteilabschnitt 56 länger als der zweite Gleitteilabschnitt 60 ausgebildet, damit auch das endseitige Federelement 36, das lediglich an einen Gleitschuh angrenzt, in adäquater Weise in radialer Richtung abgestützt werden kann.

Die Gleitschuhe 40 bzw. 42 weisen jeweils einen nicht zusammenhängenden ersten Oberflächenabschnitt 64 auf, der den Federelementen 36, 38 bzw. 38, 38 zugewandt ist. Dieser erste Oberflächenabschnitt 64 ist dabei härter als ein anderer Oberflächenabschnitt des Gleitschuhs 40 bzw. 42 ausgebildet. Der Oberflächenabschnitt 64 umfasst in der dargestellten Ausführungsform eine an dem ersten Gleitteilabschnitt 56 angeordnete erste Stützfläche 66 zur radialen Abstützung des Federelementes 36, 38, eine an dem zweiten Gleitteilabschnitt 60 angeordnete zweite Stützfläche 68 zur radialen Abstützung des Federelementes 38, 38, eine an dem Zwischenteil 54 angeordnete erste Stützfläche 70 zur axialen Abstützung des Federelementes 36, 38 und eine auf der Gegenseite des Zwischenteils 54 angeordnete zweite Stützfläche 72 zur axialen Abstützung des Federelementes 38, 38.

Der Gleitschuh 40, 42 weist ferner einen zweiten Oberflächenabschnitt 74 auf, der eine radial nach außen weisende Gleitfläche 76 zur gleitenden Abstützung des Gleitschuhs 40, 42 an dem Kragen (kein Bezugszeichen) der hinteren Seitenscheibe 12 des Sekundärelements 8 umfasst. Der zweite Oberflächenabschnitt 74 ist dabei härter als ein anderer Oberflächenabschnitt des Gleitschuhs 40, 42 ausgebildet, weist jedoch eine geringere Härte als der erste Oberflächenabschnitt 64 auf. Der zweite Oberflächenabschnitt 74 kann grundsätzlich auf die selbe Weise wie der erste Oberflächenabschnitt 64 erzeugt werden, wie dies nachstehend erläutert wird.

Der erste Oberflächenabschnitt 64 ist von vier metallischen, plattenartigen Einlagen 78, 80, 82 bzw. 84 gebildet, von denen jeweils eine Seite die erste Stützfläche 66 zur radialen Abstützung, die erste Stützfläche 70 zur axialen Abstützung, die zweite Stützfläche 72 zur axialen Abstützung und die erste Stützfläche 68 zur radialen Abstützung der Federelemente 36, 38 ausbildet. Die Einlagen 78, 80, 82, 84, die härter als das Grundmaterial des Grundkörpers 50 ausgebildet sind, sind in das Grundmaterial eingegossen, was beispielsweise durch ein Spritzgießverfahren erreicht werden kann. Die Härte der Einlagen 78, 80, 82, 84 entspricht dabei jeweils der Härte der an die Einlagen 78, 80, 82, 84 angrenzenden Federelemente 36, 38.

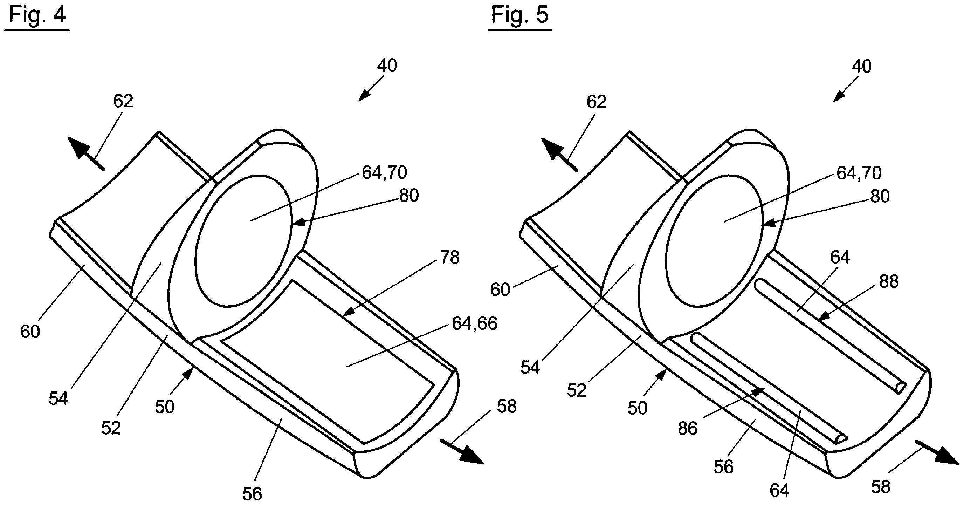

Alternativ kann der erste Oberflächenabschnitt 64 jedoch auch von einer entsprechenden Beschichtung auf dem Grundkörper 50 gebildet sein, die entsprechend härter als das Grundmaterial ist. Die plattenartige Einlage 78, 84 an dem ersten und zweiten Gleitteilabschnitt 56, 60 kann ferner derart gekrümmt ausgebildet sein, dass eine großflächige radiale Abstützung und sichere Positionierung des Federelementes 36, 38 gewährleistet ist. Dies wird später eingehender unter Bezugnahme auf Fig. 4 erläutert.

Nachstehend wird die Funktionsweise des Torsionsschwingungsdämpfers 2 erläutert. Im Betrieb rotiert der Torsionsschwingungsdämpfer 2 um seine Rotationsachse. Die Federelemente 36, 38 liegen zum einen stirnseitig an den Stützflächen 70, 72 und zumindest teilweise an den Stützflächen 66, 68 des ersten Oberflächenabschnitts 64 an dem Gleitschuh 40, 42 an. Bei besonders hohen Drehzahlen biegen sich die Federelemente 36, 38 zusätzlich in radialer Richtung des Torsionsschwingungsdämpfers 2 nach außen, so dass die Federelemente 36, 38 an weiteren Stellen an den Stützflächen 66, 68 zur radialen Abstützung anliegen. Durch das Zusammendrücken und die darauf folgende erneute Verlängerung der Federelemente 36, 38, werden die einzelnen Windungen der Federelemente 36, 38 gegenüber den Stützflächen 66, 68 verschoben, wodurch eine starke Reibung zwischen dem Federelement 36, 38 einerseits und der Stützfläche 66, 68 andererseits entsteht. Dank des härteren ersten Oberflächenabschnitts 64 wird jedoch ein starker Verschleiß an dem Gleitschuh 40, 42 verhindert. Darüber hinaus ist der Abrieb geringer, wodurch eine Verschmutzung des Schmiermittels (nicht dargestellt) innerhalb des Torsionsschwingungsdämpfers 2 weitgehend vermieden wird. Bei dem Schmiermittels kann es sich beispielsweise um Öl handeln. Entsprechendes gilt für die Stützflächen 70, 72 des ersten Oberflächenabschnitts, wobei die durch die Relativbewegung zwischen Federelement 36, 38 und Gleitschuh 40, 42 bedingte Reibung hier geringer ist.

Dass die endseitigen Gleitschuhe 40, die an ein endseitiges Federelement 36 angrenzen, einer größeren Verschleißbelastung ausgesetzt sind als die ausschließlich an ein Federelement 38 angrenzenden Gleitschuhe 42, wurde in einer weiteren Ausführungsform des Torsionsschwingungsdämpfers 2 berücksichtigt, die in Fig. 3 gezeigt ist. Die zweite Ausführungsform ähnelt dabei der ersten Ausführungsform, so dass nachstehend lediglich auf die Unterschiede eingegangen wird und gleiche Bezugszeichen für gleiche Teile verwendet werden, wobei die obige Beschreibung dann entsprechend gilt.

Als endseitige Gleitschuhe 40, die an ein endseitiges Federelement 36 angrenzen, kommen bei dieser Ausführungsform die erfindungsgemäßen Gleitschuhe mit dem härteren ersten Oberflächenabschnitt 64 zum Einsatz. Darüber hinaus kommen als Gleitschuhe 42, die ausschließlich an die Federelemente 38 angrenzen, die nicht an den Primärmitnehmer 14, 16 und/oder den Sekundärmitnehmer 18, 20 angrenzen, herkömmliche Gleitschuhe 42' zum Einsatz, die zwar auch einen ersten Oberflächenabschnitt aufweisen, der den Federelementen 38 zugewandt ist und der Abstützung dient, der jedoch nicht härter als andere Oberflächenabschnitte ausgebildet ist. So kann der herkömmliche Gleitschuh 42' beispielsweise vollständig aus faserverstärktem Kunststoff bestehen und eine härtere Gleitfläche 76 aufweisen.

Der endseitige Gleitschuh 40 der zweiten Ausführungsform, der in Fig. 4 ferner perspektivisch dargestellt ist, ist weiterhin dahingehend gegenüber dem Gleitschuh 40 der ersten Ausführungsform verändert, als dass die härtere Stützfläche 66 zur radialen Abstützung der endseitigen Federelementes 36 lediglich an dem ersten Gleitteilabschnitt 56 vorgesehen ist. Eine härtere Stützfläche zur radialen Abstützung des weiterhin an den Gleitschuh 40 angrenzenden Federelementes 38 ist an dem zweiten Gleitteilabschnitt 60 nicht vorgesehen. So ist der Fertigungsaufwand lediglich bei den endseitigen Gleitschuhen 40 erhöht, wohingegen der Aufwand für die herkömmlichen Gleitschuhe 42' gering ist. Trotz des Einsatzes herkömmlicher Gleitschuhe 42' neben den erfindungsgemäßen Gleitschuhen 40 ist der Abrieb und somit die Verschmutzung des Schmiermittels innerhalb des Torsionsschwingungsdämpfers 2 gering.

Die plattenartige Einlage 78 zur Ausbildung der Stützfläche 66 ist in einer eine großflächige radiale Abstützung des endseitigen Federelementes 36 gewährleistenden Weise gekrümmt. So ist die Einlage 78 derart gekrümmt, dass der erste Oberflächenabschnitt 64 das endseitige Federelement 36 teilweise eng anliegend umschließt, wodurch nicht nur eine großflächige Anlage sondern auch eine sichere Positionierung des Federelementes an dem ersten Oberflächenabschnitt 64 gewährleistet ist.

Eine alternative Ausführungsform zur Ausbildung der Stützfläche 66 ist in Fig. 5 gezeigt. Hier ist der erste Oberflächenabschnitt 64 unter anderem von zwei lang gestreckten, schienenartigen Einlagen 86, 88 gebildet, die sich voneinander beabstandet und parallel zueinander in Längsrichtung des ersten Gleitteilabschnitts 56 erstrecken. Indem die schienenartigen Einlagen 86, 88 in Richtung des endseitigen Federelementes 36 hervorstehen, kann das Federelement 36 in radialer Richtung zentrierend abgestützt, also sicher positioniert werden.

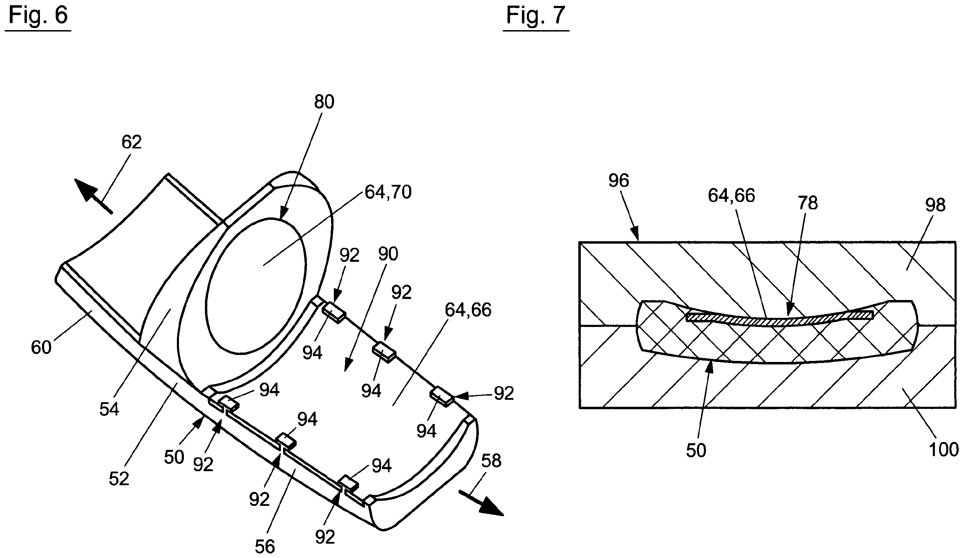

Eine weitere alternative Ausführungsform zur Ausbildung der Stützfläche 66 ist in Fig. 6 gezeigt. Diese Ausführungsform entspricht weitgehend der Ausführungsform von Fig. 4, so dass nachstehend lediglich auf die Unterschiede zu der Ausführungsform nach Fig. 4 eingegangen wird, wobei gleiche Bezugszeichen für gleiche oder ähnliche Teile verwendet werden und die obige Beschreibung ansonsten entsprechend gilt.

Bei dem Gleitschuh 40 nach Fig. 6 wird der erste Oberflächenabschnitt 64 zumindest teilweise von einer plattenartigen Einlage 90 gebildet. Wie bereits die Einlage 78 von Fig. 4 ist die plattenartige Einlage 90 formschlüssig mit dem Grundkörper 50 des Gleitschuhs 40 verbunden, was insofern von Vorteil ist, als dass ein sicherer Zusammenhalt zwischen der Einlage 90 und dem Grundkörper 50 geschaffen wird. Im Gegensatz zur Fig. 4 ist die Einlage 90 jedoch nicht in den Grundkörper 50 eingegossen, sondern mit diesem vernietet. Zu diesem Zweck sind mehrere Nietkörper 92 vorgesehen, die einstückig mit dem Grundkörper 50 ausgebildet sind. Die Nietkörper 92 bestehen somit aus demselben Material wie der Grundkörper 50 und sind vorzugsweise in einem gemeinsamen Gießverfahren mit dem Grundkörper 50 erzeugt worden, wie dies später eingehender erläutert wird. Die Nietkörper 92 weisen jeweils einen Nietkopf 94 auf, der die Einlage 90 klemmend hintergreift, so dass die Einlage 90 sicher an dem Grundkörper 50 befestigt ist.

Das in Fig. 1 gezeigte Dividierblech kann als Gleitschuhe 44 Gleitschuhe aufweisen, die wie die Gleitschuhe 40, 42, 42' aus den Fig. 1 bis 6 ausgebildet sind. In diesem Fall könnten die Zwischenteile beispielsweise radial nach innen verlängert und mit dem Ringelement 48 verbunden sein.

Nachstehend wird eine erste Ausführungsform des erfindungsgemäßen Verfahrens zur Herstellung eines erfindungsgemäßen Gleitschuhs unter Bezugnahme auf Fig. 7 erläutert. Fig. 7 zeigt einen Querschnitt durch eine Gussform 96, die sich aus einem Oberteil 98 und einem Unterteil 100 zusammensetzt, die einen Hohlraum einschließen, der im Wesentlichen der Endform des herzustellenden Gleitschuhs 40 von Fig. 4 entspricht. Bei dieser ersten Ausführungsform des Verfahrens wird die plattenartige Einlage 78 zunächst in den Hohlraum innerhalb der Gussform eingebracht. Dabei liegt diejenige Oberfläche der Einlage 78 an einer Seite der Gussform 96 an, die später die freiliegende erste Stützfläche 66 des ersten Oberflächenabschnitts 64 ausbilden soll. Anschließend wird der Hohlraum mit dem Grundmaterial des Grundkörpers 50 befüllt, wie dies anhand der Doppelschraffur angedeutet ist. Die Einlage 78 wird dabei derart von dem Grundmaterial umgeben, dass diese fest mit dem ausgehärteten Grundkörper 50 verbunden ist. Die Einlage 78 ist somit in den Grundkörper 50 bzw. das Grundmaterial eingegossen.

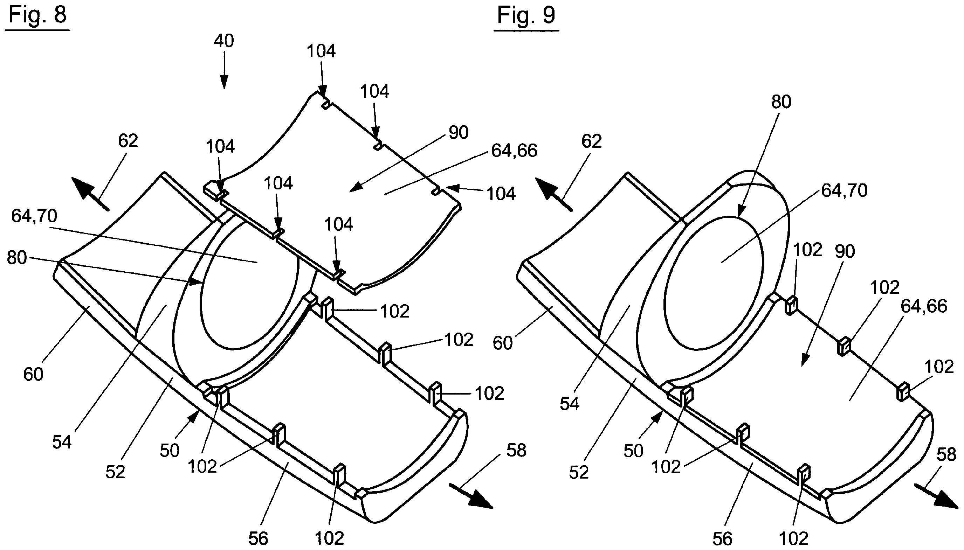

Eine zweite Ausführungsform des erfindungsgemäßen Verfahrens zur Herstellung des Gleitschuhs 40 nach Fig. 6 ist in den Fig. 8 und 9 veranschaulicht. Hier wird zunächst ein Grundkörper 50 bereitgestellt, der mehrere Vorsprünge 102 aufweist, die einstückig mit dem Grundkörper 50 ausgebildet und somit auch aus demselben Grundmaterial bestehen (Fig. 8). Es wird ferner eine separate Einlage 90 bereitgestellt, die randseitige Aussparungen 104 aufweist. Anschließend wird die Einlage 90 derart an den Grundkörper 50 angelegt, dass sich die Vorsprünge 102 durch die Aussparungen 104 erstrecken, wie dies in Fig. 9 zu sehen ist. Danach werden die durch die Aussparungen 104 hervorstehenden Enden der Vorsprünge 102 derart plastisch verformt, dass diese den Nietkopf 94 (Fig. 6) des Nietkörpers 92 ausbilden. Der Nietkopf 94 hintergreift den Rand der Aussparungen 104 der Einlage 90 klemmend, so dass die Einlage 90 an dem Grundkörper 50 befestigt ist.

Beide vorstehend beschriebenen Ausführungsformen des Verfahrens bewirken eine vorteilhafte formschlüssige Verbindung zwischen dem Grundkörper 50 und der Einlage 78 bzw. 90, so dass ein besonders sicherer Halt der Einlage 78 bzw. 90 an dem Grundkörper 50 gewährleistet ist.

### Bezugszeichenliste

- 2: Torsionsschwingungsdämpfer
- 4: Primärelement
- 6: Mittelscheibe
- 8: Sekundärelement
- 10: vordere Seitenscheibe
- 12: hintere Seitenscheibe
- 14,16: Primärmitnehmer
- 18,20: Sekundärmitnehmer
- 22: Vorderteil
- 24: Hinterteil
- 26: Vorderteil
- 28: Hinterteil
- 30: Ringraum
- 32: erste Federeinrichtung
- 34: zweite Federeinrichtung
- 36: Federelement
- 38: Federelement
- 40: Gleitschuh
- 42: Gleitschuh
- 42': herkömmlicher Gleitschuh
- 44: Gleitschuh/Trennelement
- 46: Dividierblech
- 48: Ringelement
- 50: Grundkörper
- 52: Gleitteil
- 54: Zwischenteil
- 56: Gleitteilabschnitt
- 58: Umfangsrichtung
- 60: Gleitteilabschnitt
- 62: Umfangsrichtung
- 64: erster Oberflächenabschnitt
- 66: erste Stützfläche zur radialen Abstützung
- 68: zweite Stützfläche zur radialen Abstützung
- 70: erste Stützfläche zur axialen Abstützung
- 72: zweite Stützfläche zur axialen Abstützung
- 74: zweiter Oberflächenabschnitt
- 76: Gleitfläche
- 78,80,82,84: plattenartige Einlagen
- 86,88: schienenartige Einlagen
- 90: plattenartige Einlage
- 92: Nietkörper
- 94: Nietkopf
- 96: Gussform
- 98: Oberteil
- 100: Unterteil
- 102: Vorsprünge
- 104: Aussparungen

## Patentansprüche

1. Gleitschuh (40, 42, 44) für einen Torsionsschwingungsdämpfer mit einem ersten Oberflächenabschnitt (64), der im Einbauzustand einem angrenzenden Federelement zugewandt ist und härter als ein anderer Oberflächenabschnitt des Gleitschuhs (40, 42, 44) ausgebildet ist, und einem Grundkörper (50), der aus einem Grundmaterial besteht, wobei der erste Oberflächenabschnitt (64) von mindestens einer Einlage (78, 80, 82, 84, 86, 88, 90) gebildet ist, die härter als das Grundmaterial ausgebildet ist, **dadurch gekennzeichnet, dass** der erste Oberflächenabschnitt (64) von mindestens zwei lang gestreckten, voneinander beabstandeten und hervorstehenden Einlagen (86, 88), an denen ein Federelement in radialer Richtung zentrierend abstützbar ist, oder von einer plattenartigen Einlage (78; 84) gebildet ist, die in einer eine großflächige radiale Abstützung eines Federelementes gewährleistenden Weise gekrümmt ist.

2. Gleitschuh nach Anspruch 1, **dadurch gekennzeichnet, dass** der erste Oberflächenabschnitt (64) eine Stützfläche (66, 68) zur radialen Abstützung des Federelementes aufweist.

3. Gleitschuh nach einem der Ansprüche 1 oder 2, **dadurch gekennzeichnet, dass** der erste Oberflächenabschnitt (64) eine Stützfläche (70, 72) zur axialen Abstützung des Federelementes aufweist.

4. Gleitschuh nach einem der vorangehenden Ansprüche, **dadurch gekennzeichnet, dass** der Gleitschuh (40, 42, 44) einen zweiten Oberflächenabschnitt (74) aufweist, der eine Gleitfläche (76) zur gleitenden Abstützung des Gleitschuhs (40, 42, 44) aufweist.

5. Gleitschuh nach Anspruch 4, **dadurch gekennzeichnet, dass** der zweite Oberflächenabschnitt (74) härter als ein anderer Oberflächenabschnitt des Gleitschuhs (40, 42, 44) ausgebildet ist.

6. Gleitschuh nach Anspruch 5, **dadurch gekennzeichnet, dass** der erste Oberflächenabschnitt (64) härter als der zweite Oberflächenabschnitt (74) ausgebildet ist.

7. Gleitschuh nach einem der vorangehenden Ansprüche, **dadurch gekennzeichnet, dass** das Grundmaterial des Grundkörpers (50) Kunststoff, vorzugsweise faserverstärkter Kunststoff, ist.

8. Gleitschuh nach einem der Ansprüche 4 bis 7, **dadurch gekennzeichnet, dass** der zweite Oberflächenabschnitt von mindestens einer Einlage gebildet ist, die härter als das Grundmaterial ausgebildet ist.

9. Gleitschuh nach einem der vorangehenden Ansprüche, **dadurch gekennzeichnet, dass** die Einlage (78, 80, 82, 84, 90) formschlüssig mit dem Grundkörper (50) verbunden ist.

10. Gleitschuh nach einem der vorangehenden Ansprüche, **dadurch gekennzeichnet, dass** die Einlage (78, 80, 82, 84, 86, 88, 90) in das Grundmaterial eingegossen oder mit dem Grundkörper (50) vernietet ist.

11. Gleitschuh nach Anspruch 10, **dadurch gekennzeichnet, dass** die Nietkörper (92) zum Vernieten der Einlage (78, 80, 82, 84, 90) einstückig mit dem Grundkörper (50)ausgebildet sind.

12. Gleitschuh nach einem der Ansprüche 4 bis 7, **dadurch gekennzeichnet, dass** der zweite Oberflächenabschnitt (74) von einer Beschichtung auf dem Grundkörper (50) gebildet ist, die härter als das Grundmaterial ausgebildet ist.

13. Gleitschuh nach einem der vorangehenden Ansprüche, **dadurch gekennzeichnet, dass** die Einlage (78, 80, 82, 84) und/oder die Beschichtung aus Metall besteht.

14. Gleitschuh nach einem der vorangehenden Ansprüche, **dadurch gekennzeichnet, dass** der Grundkörper (50) ein Zwischenteil (54) zur Anordnung zwischen zwei angrenzenden Federelementen und ein Gleitteil (52) aufweist.

15. Gleitschuh nach Anspruch 14, **dadurch gekennzeichnet, dass** das Gleitteil (52) einen ersten Gleitteilabschnitt (56), der sich in die eine Umfangsrichtung (58) erstreckt, und einen zweiten Gleitteilabschnitt (60) umfasst, der sich in die andere Umfangsrichtung (62) erstreckt.

16. Gleitschuh nach Anspruch 15, **dadurch gekennzeichnet, dass** die Stützfläche (66, 68) zur radialen Abstützung eines Federelementes an dem ersten und/oder zweiten Gleitteilabschnitt (56, 60) vorgesehen ist.

17. Gleitschuh nach Anspruch 16, **dadurch gekennzeichnet, dass** die Stützfläche (66) zur radialen Abstützung eines Federelementes lediglich an dem ersten Gleitteilabschnitt (56) vorgesehen ist.

18. Gleitschuh nach Anspruch 17, **dadurch gekennzeichnet, dass** der erste Gleitteilabschnitt (56) länger als der zweite Gleitteilabschnitt (60) ausgebildet ist.

19. Gleitschuh nach einem der Ansprüche 14 bis 18, **dadurch gekennzeichnet, dass** die Stützfläche (70, 72) zur axialen Abstützung eines Federelementes an dem Zwischenteil (54) vorgesehen ist.

20. Dividierblech (46) mit mindestens einem Gleitschuh (40, 42, 44) nach einem der vorangehenden Ansprüche.

21. Torsionsschwingungsdämpfer (2) mit mindestens einem Gleitschuh (40, 42, 44) und/oder einem Dividierblech (46) nach einem der vorangehenden Ansprüche.

22. Torsionsschwingungsdämpfer nach Anspruch 21, **dadurch gekennzeichnet, dass** der Torsionsschwingungsdämpfer (2) ein Primärelement (4) mit mindestens einem Primärmitnehmer (14, 16), ein Sekundärelement (8) mit mindestens einem Sekundärmitnehmer (18, 20) und mindestens eine Federeinrichtung (32, 34) zur federelastischen Kopplung von Primärelement (4) und Sekundärelement (8) aufweist, wobei die Federeinrichtung (32, 34) mindestens zwei in Umfangsrichtung hintereinander angeordnete Federelemente (36, 38) umfasst, zwischen denen der Gleitschuh (40, 42, 44) angeordnet ist.

23. Torsionsschwingungsdämpfer nach einem der Ansprüche 21 oder 22, **dadurch gekennzeichnet, dass** der erste Oberflächenabschnitt (64) die gleiche Härte wie das angrenzende Federelement (36, 38) aufweist.

24. Torsionsschwingungsdämpfer nach einem der Ansprüche 21 bis 23, **dadurch gekennzeichnet, dass** sowohl die genannten Gleitschuhe (40, 42, 44) als auch herkömmliche Gleitschuhe (42') vorgesehen sind, wobei die genannten Gleitschuhe (40, 42, 44) an ein Federelement (36) angrenzen, an das der Primärmitnehmer (14, 16) und/oder der Sekundärmitnehmer (18, 20) angrenzt, während die herkömmlichen Gleitschuhe (42') ausschließlich an Federelemente (38) angrenzen, die nicht an den Primärmitnehmer (14, 16) und/oder den Sekundärmitnehmer (18, 20) angrenzen.

25. Verfahren zur Herstellung eines Gleitschuhs nach einem der Ansprüche 1 bis 19 mit den Verfahrensschritten Bereitstellen einer Einlage, die härter als das Grundmaterial eines Grundkörpers des Gleitschuhs ausgebildet ist, und
Vernieten der Einlage mit dem Grundkörper.

26. Verfahren nach Anspruch 25, bei dem das Vernieten der Einlage mit dem Grundkörper die Verfahrensschritte
Bereitstellen eines Grundkörpers mit mindestens einem Vorsprung, der einstückig mit dem Grundkörper ausgebildet ist,
Anlegen der Einlage an den Grundkörper und
plastisches Verformen des Vorsprungs zur Erzeugung eines die Einlage klemmend hintergreifenden Nietkopfes aufweist.

27. Verfahren nach Anspruch 26, bei dem eine Einlage mit mindestens einer Aussparung bereitgestellt wird, wobei die Einlage derart an den Grundkörper angelegt wird, dass sich der Vorsprung durch die Aussparung erstreckt.

## Claims

1. Sliding block (40, 42, 44) for a torsional vibration damper, with a first surface section (64) which, in the installation state, faces an adjacent spring element and is designed to be harder than another surface section of the sliding block (40, 42, 44), and with a basic body (50) which consists of a basic material, wherein the first surface section (64) is formed by at least one insert (78, 80, 82, 84, 86, 88, 90) which is designed to be harder than the basic material, **characterized in that** the first surface section (64) is formed by at least two elongate inserts (86, 88) which are spaced apart from one another and project, and on which a spring element can be supported in a centering manner in the radial direction, or by a plate-like insert (78; 84) which is curved in a way ensuring a large-area radial support of a spring element.

2. Sliding block according to Claim 1, **characterized in that** the first surface section (64) has a supporting surface (66, 68) for the radial support of the spring element.

3. Sliding block according to either one of Claims 1 and 2, **characterized in that** the first surface section (64) has a supporting surface (70, 72) for the axial support of the spring element.

4. Sliding block according to one of the preceding claims, **characterized in that** the sliding block (40, 42, 44) has a second surface section (74) which has a sliding surface (76) for the sliding support of the sliding block (40, 42, 44).

5. Sliding block according to Claim 4, **characterized in that** the second surface section (74) is designed to be harder than another surface section of the sliding block (40, 42, 44).

6. Sliding block according to Claim 5, **characterized in that** the first surface section (64) is designed to be harder than the second surface section (74).

7. Sliding block according to one of the preceding claims, **characterized in that** the basic material of the basic body (50) is plastic, preferably fiber-reinforced plastic.

8. Sliding block according to one of Claims 4 to 7, **characterized in that** the second surface section is formed by at least one insert which is designed to be harder than the basic material.

9. Sliding block according to one of the preceding claims, **characterized in that** the insert (78, 80, 82, 84, 90) is connected positively to the basic body (50).

10. Sliding block according to one of the preceding claims, **characterized in that** the insert (78, 80, 82, 84, 86, 88, 90) is cast into the basic material or is riveted together with the basic body (50).

11. Sliding block according to Claim 10, **characterized in that** the rivet bodies (92) for riveting the insert (78, 80, 82, 84, 90) are formed in one piece with the basic body (50).

12. Sliding block according to one of Claims 4 to 7, **characterized in that** the second surface section (74) is formed by a coating on the basic body (50), which coating is designed to be harder than the basic material.

13. Sliding block according to one of the preceding claims, **characterized in that** the insert (78, 80, 82, 84) and/or the coating consist/consists of metal.

14. Sliding block according to one of the preceding claims, **characterized in that** the basic body (50) has an intermediate part (54) for arrangement between two adjacent spring elements and a sliding part (52).

15. Sliding block according to Claim 14, **characterized in that** the sliding part (52) comprises a first sliding part section (56), which extends in one circumferential direction (58), and a second sliding part section (60), which extends in the other circumferential direction (62).

16. Sliding block according to Claim 15, **characterized in that** the supporting surface (66, 68) for the radial support of a spring element is provided on the first and/or the second sliding part section (56, 60).

17. Sliding block according to Claim 16, **characterized in that** the supporting surface (66) for the radial support of a spring element is provided only on the first sliding part section (56).

18. Sliding block according to Claim 17, **characterized in that** the first sliding part section (56) is designed to be longer than the second sliding part section (60).

19. Sliding block according to one of Claims 14 to 18, **characterized in that** the supporting surface (70, 72) for the axial support of a spring element is provided on the intermediate part (54).

20. Separator sheet (46) comprising at least one sliding block (40, 42, 44) according to one of the preceding claims.

21. Torsional vibration damper (2) comprising at least one sliding block (40, 42, 44) and/or one separator sheet (46) according to one of the preceding claims.

22. Torsional vibration damper according to Claim 21, **characterized in that** the torsional vibration damper (2) has a primary element (4) with at least one primary dog (14, 16), a secondary element (8) with at least one secondary dog (18, 20) and at least one spring device (32, 34) for the spring-elastic coupling of the primary element (4) and secondary element (8), the spring device (32, 34) comprising at least two spring elements (36, 38) which are arranged one behind the other in the circumferential direction and between which the sliding block (40, 42, 44) is arranged.

23. Torsional vibration damper according to either one of Claims 21 and 22, **characterized in that** the first surface section (64) has the same hardness as the adjacent spring element (36, 38).

24. Torsional vibration damper according to one of Claims 21 to 23, **characterized in that** both said sliding blocks (40, 42, 44) and conventional sliding blocks (42') are provided, said sliding blocks (40, 42, 44) being adjacent to a spring element (36) to which the primary dog (14, 16) and/or the secondary dog (18, 20) are/is adjacent, while the conventional sliding blocks (42') are adjacent solely to spring elements (38) which are not adjacent to the primary dog (14, 16) and/or the secondary dog (18, 20).

25. Method for producing a sliding block according to one of Claims 1 to 19, with the method steps
provision of an insert which is designed to be harder than the basic material of a basic body of the sliding block, and
riveting of the insert together with the basic body.

26. Method according to Claim 25, in which the riveting of the insert together with the basic body has the method steps
provision of a basic body having at least one projection which is formed in one piece with the basic body,
laying of the insert onto the basic body, and
plastic deformation of the projection to produce a rivet head engaging clampingly behind the insert.

27. Method according to Claim 26, in which an insert having at least one clearance is provided, the insert being laid onto the basic body in such a way that the projection extends through the clearance.

## Revendications

1. Patin (40, 42, 44) pour un amortisseur de vibrations torsionnelles, comprenant une première portion de surface (64) qui, à l'état monté, fait face à un élément ressort adjacent et qui est réalisée plus dure qu'une autre portion de surface du patin (40 42, 44), et un corps de base (50) qui se compose d'un matériau de base, la première portion de surface (64) étant formée par au moins un insert (78, 80, 82, 84, 86, 88, 90), qui est réalisé plus dur que le matériau de base, **caractérisé en ce que** la première portion de surface (64) est formée par au moins deux inserts (86, 88) étendus en longueur, espacés l'un de l'autre et faisant saillie, contre lesquels un élément ressort peut prendre appui avec effet de centrage dans le sens radial, ou par un insert (78 ; 84) de type plaque qui est incurvé d'une manière qui garantit un soutien radial sur une grande surface d'un élément ressort.

2. Patin selon la revendication 1, **caractérisé en ce que** la première portion de surface (64) possède une surface support (66, 68) servant au soutien radial de l'élément ressort.

3. Patin selon l'une des revendications 1 et 2, **caractérisé en ce que** la première portion de surface (64) possède une surface support (70, 72) servant au soutien axial de l'élément ressort.

4. Patin selon l'une des revendications précédentes, **caractérisé en ce que** le patin (40, 42, 44) possède une deuxième portion de surface (74) qui possède une surface de glissement (76) servant au soutien glissant du patin (40, 42, 44).

5. Patin selon la revendication 4, **caractérisé en ce que** la deuxième portion de surface (74) est plus dure qu'une autre portion de surface du patin (40, 42, 44).

6. Patin selon la revendication 5, **caractérisé en ce que** la première portion de surface (64) est réalisée plus dure que la deuxième portion de surface (74).

7. Patin selon l'une des revendications précédentes, **caractérisé en ce que** le matériau de base du corps de base (50) est une matière plastique, de préférence une matière plastique renforcée par des fibres.

8. Patin selon l'une des revendications 4 á 7, **caractérisé en ce que** la deuxième portion de surface est formée par au moins un insert qui est plus dur que le matériau de base.

9. Patin selon l'une des revendications précédentes, **caractérisé en ce que** l'insert (78, 80, 82, 84, 90) est relié par complémentaritéde formes avec le corps de base (50).

10. Patin selon l'une des revendications précédentes, **caractérisé en ce que** l'insert (78, 80, 82, 84, 86, 88, 90) est scellé dans le matériau de base ou riveté avec le corps de base (50).

11. Patin selon la revendication 10, **caractérisé en ce que** les corps de rivet (92) servant à riveter l'insert (78, 80, 82, 84, 90) sont configurés d'un seul tenant avec le corps de base (50).

12. Patin selon l'une des revendications 4 à 7, **caractérisé en ce que** la deuxième portion de surface (74) est formée par un revêtement sur le corps de base (50), lequel est plus dur que le matériau de base.

13. Patin selon l'une des revendications précédentes, **caractérisé en ce que** l'insert (78, 80, 82, 84) et/ou le revêtement se composent de métal.

14. Patin selon l'une des revendications précédentes, **caractérisé en ce que** le corps de base (50) possède une partie intermédiaire (54) destinée à être disposée entre deux éléments ressorts adjacents et une partie de glissement (52).

15. Patin selon la revendication 14, **caractérisé en ce que** la partie de glissement (52) comprend une première portion de partie de glissement (56), qui s'étend dans une direction circonférentielle (58), et une deuxième portion de partie de glissement (60) qui s'étend dans l'autre direction circonférentielle (62).

16. Patin selon la revendication 15, **caractérisé en ce que** la surface support (66, 68) est conçue pour le soutien radial d'un élément ressort au niveau de la première et/ou de la deuxième portion de partie de glissement (56, 60).

17. Patin selon la revendication 16, **caractérisé en ce que** la surface support (66) est conçue pour le soutien radial d'un élément ressort uniquement au niveau de la première portion de partie de glissement (56).

18. Patin selon la revendication 17, **caractérisé en ce que** la première portion de partie de glissement (56) est réalisée plus longue que la deuxième portion de partie de glissement (60).

19. Patin selon l'une des revendications 14 à 18, **caractérisé en ce que** la surface support (70, 72) est conçue pour le soutien axial d'un élément ressort au niveau de la partie intermédiaire (54).

20. Tôle de division (46) comprenant au moins un patin (40, 42, 44) selon l'une des revendications précédentes.

21. Amortisseur de vibrations torsionnelles (2) comprenant au moins un patin (40, 42, 44) et/ou une tôle de division (46) selon l'une des revendications précédentes.

22. Amortisseur de vibrations torsionnelles selon la revendication 21, **caractérisé en ce que** l'amortisseur de vibrations torsionnelles (2) possède un élément primaire (4) comprenant au moins un taquet d'entraînement primaire (14, 16), un élément secondaire (8) comprenant au moins un taquet d'entraînement secondaire (18, 20) et au moins un dispositif à ressort (32, 34) servant à l'accouplement avec flexibilité de ressort de l'élément primaire (4) et de l'élément secondaire (8), le dispositif à ressort (32, 34) comportant au moins deux éléments ressorts (36, 38) disposés l'un derrière l'autre dans le sens circonférentiel, entre lesquels est disposé le patin (40, 42, 44).

23. Amortisseur de vibrations torsionnelles selon l'une des revendications 21 ou 22, **caractérisé en ce que** la première portion de surface (64) présente la même dureté que l'élément ressort (36, 38) adjacent.

24. Amortisseur de vibrations torsionnelles selon l'une des revendications 21 à 23, **caractérisé en ce que** lesdits patins (40, 42, 44) ainsi que des patins conventionnels (42') sont présents, dans lequel lesdits patins (40, 42, 44) sont adjacents à un élément ressort (36) auquel est adjacent le taquet d'entraînement primaire (14, 16) et/ou le taquet d'entraînement secondaire (18, 20), alors que les patins conventionnels (42') sont exclusivement adjacents à des éléments ressorts (38) qui ne sont pas adjacents au taquet d'entraînement primaire (14, 16) et/ou au taquet d'entraînement secondaire (18, 20).

25. Procédé de fabrication d'un patin selon l'une des revendications 1 à 19 avec les étapes de fourniture d'un insert qui est réalisé plus dur que le matériau de base d'un corps de base du patin, et
rivetage de l'insert avec le corps de base.

26. Procédé selon la revendication 25, selon lequel le rivetage de l'insert avec le corps de base comprend les étapes de
fourniture d'un corps de base pourvu d'au moins une partie saillante qui est formée d'un seul tenant avec le corps de base,
dépose de l'insert contre le corps de base et déformation plastique de la partie saillante en vue de produire une tête de rivet venant en prise par l'arrière de l'insert avec serrage.

27. Procédé selon la revendication 26, selon lequel l'insert est fourni avec au moins un évidement, l'insert étant déposé contre le corps de base de telle sorte que la partie saillante s'étend à travers l'évidement.
